# EUROPÄISCHE PATENTSCHRIFT

(11) **EP 2 337 822 B1**
(45) Veröffentlichungstag und Bekanntmachung des Hinweises auf die Patenterteilung: **18.12.2019**
(21) Anmeldenummer: 09756449.6
(22) Anmeldetag: 13.10.2009
(51) Int. Cl.: C09D 4/00, C09D 183/04, C09D 183/06, C09D 183/14, A61K 31/00, A61L 27/50, A61L 29/08

(54) **LANGZEITSTABILE, MIKROBIZIDE UND DIE BIOFILMBILDUNG VERHINDERNDE BESCHICHTUNG UND BESCHICHTUNGSZUSAMMENSETZUNG DAFÜR**
LONG-TERM STABLE MICROBICIDE AND COATING FOR PREVENTING BIOFILM FORMATION AND COATING COMPOSITION THEREFOR
MICROBICIDES STABLES À LONG TERME ET FORMATION D'UN REVÊTEMENT ÉVITANT LA FORMATION D'UN BIOFILM ET COMPOSITION DE REVÊTEMENT UTILISÉE A CET EFFET

(30) Priorität: 14.10.2008 DE 102008051543
(43) Veröffentlichungstag der Anmeldung: 29.06.2011
(73) Patentinhaber: EPG (Engineered nanoProducts Germany) AG, 64347 Griesheim (DE)
(72) Erfinder: ENDRES, Klaus, 66424 Homburg (DE); SCHMIDT, Helmut, 66130 Saarbrücken-Güdingen (DE)
(74) Vertreter: Held, Stephan
(86) Internationale Anmeldenummer: PCT/EP2009/063325
(87) Internationale Veröffentlichungsnummer: WO 2010/043606

(56) Entgegenhaltungen:
- WO-A1-02/36701
- WO-A1-02/36701
- DE-A1- 10 159 288
- DE-A1- 10 159 288
- DE-A1- 19 935 230
- DE-A1-102005 000 905
- US-A- 4 563 351
- US-A1- 2003 044 451
- US-A1- 2007 154 621

## Beschreibung

Die vorliegende Erfindung betrifft eine langzeitstabile, mikrobizide und die Biofilmbildung verhindernde Beschichtung auf einem Substrat und ein Verfahren zur Herstellung des Substrats mit der Beschichtung.

Auf allen natürlichen und den meisten synthetischen Materialien setzen sich in feuchter Umgebung Mikroben wie Pilze, Algen oder Bakterien ab. Dies führt z. B. zu Verwitterungsprozessen, Biofouling, Plaquebildung auf Zähnen aber auch zu lebensbedrohlichen Infektionen. Dabei sind eine große Zahl von Bereichen betroffen, wie z.B. der Lebensmittelbereich, der Produktionsbereich ("saubere Produktion"), der Haushaltsbereich, der medizinische (Hygiene im Krankenhaus) und der pharmazeutische Sektor. Aus diesem Grunde sind Verfahren und Werkstoffe, die die Eigenschaft haben, entweder die Anhaftung von Mikroben und Kontaminanten auf der Oberfläche von Anlagen, Geräten, Bauteilen usw. zu vermindern oder zu verhindern und/oder gleichzeitig ihre Abtötung bzw. Entfernung bewirken, von größtem Interesse.

Die am häufigsten eingesetzten antimikrobiellen Materialen wurden durch Imprägnierung mit Bioziden wie Silberionen, Antibiotika, quartären Ammoniumsalzen, antimikrobiellen Peptiden, Chlor oder lod, aber auch einer Reihe von organischen, mikrobizid wirkenden Komponenten, wie z.B. Chlorhexidin, Triclosan, Glycerinmonolaurat, Propylenglycolmonocaprylat, Benzoesäure, Salicylsäure oder Ethylenoxid/Propylenoxid Blockpolymer, dargestellt. Diese Substanzen werden in die Umgebung freigesetzt und töten Mikroben in der näheren Umgebung ab. Allerdings ist die Bereitstellung von Oberflächen, die eine gezielte Abgabe von mikrobiziden Komponenten über einen gewünschten und einstellbaren Zeitraum zulassen, immer noch mangelhaft.

Im Falle von Beschichtungswerkstoffen, die auf die Oberfläche der mikrobenfrei zu haltenden Substratmaterialien aufgetragen werden, finden nach dem Stand der Technik häufig Silberkolloide enthaltende Beschichtungswerkstoffe auf der Basis von Polymerlacken, anorganisch-organischen Hybridmaterialien oder auch anorganischen, über den Sol-Gel-Prozess hergestellten oxidischen Schichten Verwendung Darüber hinaus wurden Oberflächen mit antimikrobiell wirkenden Polymeren chemisch modifiziert. Im ersten Falle beruht die Wirkung auf der Freisetzung von Silberionen, die aus dem Beschichtungswerkstoffe an die Oberfläche diffundieren und dort ihre mikrobizide Wirkung entfalten Dabei sind sowohl in die Beschichtungswerkstoffe eingearbeitete Silbersalze, als auch kolloidale Silberpartikel wirksam Während bei den Silbersalzen das Silber schon in Form von Silberionen vorliegt, ist es bei den kolloidalen Silberpartikeln erforderlich, dass durch die Eindiffusion von Wasser und Sauerstoff zunächst einmal eine Oxidation zu einwertigem Silber abläuft

Die Verwendung von Silber ist allerdings nicht unumstritten. So haben zum Beispiel Untersuchungen in den USA gezeigt, dass die Verwendung von silberhaltigen Komponenten in Waschprozessen zur deutlichen Verringerung der gewünschten mikrobiellen Aktivität von Kläranlagen führt. Auch sind die gesundheitlichen Folgen von permanent produziertem Silber noch nicht bis ins letzte untersucht, wenngleich klar ist, dass die toxischen Dosen bei Menschen um mindestens den Faktor 50 niedriger liegen als bei verschiedenen Bakterien. Auch Kupfer ist als mikrobizid wirkender Stoff vorgeschlagen und zum Teil auch verwendet worden. Es ist daher wünschenswert, Systeme mit Langzeitwirkung zur Verfügung zu haben, die nicht auf der Anwendung von Silber oder anderen Schwermetallen beruhen oder bei denen Silber durch gleichzeitige Verwendung nicht schwermetallhaltiger Komponenten stark reduziert werden kann

Mikrobizid wirkende Polymerbeschichtungen stellen sogenannte kontaktaktive Oberflächen dar Der Nachteil solcher Systeme ist die Anfälligkeit dieser Oberflächen und ihrer Funktion bei mechanischer oder chemischer Belastung

Ein weiteres wichtiges System sind Oberflächen mit kombinierten Eigenschaften. Von C. Becker-Williger, Z. Csögör, J. Gerwann, H. Schmidt, "Antimicrobic low surface-free energy nanocomposit coatings", Hygienic Coatings und in DE-A1-10219679 und DE-A1-10128625 wurde gezeigt, dass die Wirkung von Silberionen in Verbindung mit antiadhäsiven Oberflächen deutlich besser ist. Dies kann dadurch erklärt werden, dass Mikroben zunächst auf der Oberfläche gut anhaften müssen, damit eine Vermehrung stattfindet Ist dies nicht der Fall, werden sie relativ einfach abgelöst, d.h. es fehlt ein Untergrund, auf dem sie sich "wohl fühlen". In solchen Fällen ist die Biofilmbildung drastisch eingeschränkt Irrtümlicherweise werden solche Oberflächen gelegentlich ebenfalls als mikrobizid bezeichnet.

Ein häufig eingesetztes Desinfektionsmittel ist das oben schon erwähnte Chlorhexidin, dessen antimikrobielle Wirkung in zahlreichen Untersuchungen nachgewiesen wurde Chlorhexidin weist aufgrund seiner Eigenschaft, in die bakterielle Membran eindringen zu können und damit zum Verlust kleinerer Moleküle des Bakteriums und zur Ausfällung cytoplasmatischer Proteine zu führen, eine gute antiseptische Wirksamkeit auf, da es letztendlich zur Zerstörung der bakteriellen Zellmembran kommt. Höchste Aktivität zeigt es gegen gram-positive Kokken, geringere gegen gram-positive und gram-negative Stäbchen. Moderate Aktivität kann sogar bei behüllten Viren beobachtet werden.

Oral in Substanz angewandt hat Chlorhexidin den Vorteil, längere Zeit auf Zähnen und der Mundschleimhaut zu haften, ohne durch die Schleimhäute in den Körper einzudringen. Darüber hinaus wird Chlorhexidin annähernd zu 100 % wieder ausgeschieden, ohne metabolisiert zu werden

Chlorhexidin wird aufgrund dieser antibakteriellen Wirkung sowohl als Mundspüllösung verwendet als auch als Polymerlack auf Basis von Vinylpyrrolidon, allerdings mit sehr hohen Chlorhexidingehalten (nicht weniger als 20%) auf die Zähne aufgetragen, der den Wirkstoff über begrenzte Zeiträume (zirka drei bis vier Monate) abgibt. Außerdem gibt es Chlorhexidin-Sprays, -Gele und -Chips (Perio-Chip) Chlorhexidin findet außerhalb der Zahnmedizin Verwendung als Desinfektionsmittel, wie z B. in Pflastern und Wundheilsalben.

Als Zusatz zu Beschichtungswerkstoffen wird Chlorhexidin in mehreren Patenten beschrieben So wird in EP-A2-0264660 ein Dentalwerkstoff beschrieben, bei dem Mischungen aus Thymol, Carvacol und Chlorhexidin in Schellack, Benzoinharz oder Polyvinylpyrrolidon eingebracht werden Diese Zusammensetzungen werden zur Bekämpfung von Karies oder Parodontose auf dentale Werkstoffe aufgebracht, wobei der Wirkstoff in das dentale Material eindiffundiert und so die Bildung von Karies unterdrücken soll. Dabei werden Mischungen aus Thymol und/oder Carvacol in Konzentrationsbereichen zwischen 10 und 0,5 Gew.-% mit Chlorhexidin eingesetzt, wobei die Konzentration an Chlorhexidin im Bereich von 2 bis 0,01 Gew-% liegt. Gemäß dieser Anmeldung werden mit diesen Zusammensetzungen keine Langzeitwirkungen erreicht, wenn die Mischungen aus Thymol, Carvacol und Chlorhexidin als Zahnlack eingesetzt werden.

In EP-B1-0428520 wird eine antimikrobielle Zusammensetzung für Zahnoberflächen beschrieben, die einen physiologisch akzeptablen Lack und Chlorhexidin enthält, wobei der Lack auf natürlichen Harzen basiert und die notwendige Chlorhexidinkonzentration größer 20 Gew. % ist. Mikrobizide Effekte über mehrere Wochen in den Beschichtungen werden nur mit extrem hohen Gehalten über 40 Gew.-% Chlorhexidin erreicht. US 4496322 offenbart einen Dentalack, der Chlorhexidin, einen Benzoinkautschuk und ein oral akzeptiertes Lösungsmittel enthält. Dieser Lack wird auf Zähne aufgebracht und gibt das antimokrobielle Agens für die Dauer von einigen Tagen ab, d. h. auch diese Zusammensetzungen bieten keine Langzeitwirkung

Wie aus dem Stand der Technik ersichtlich, werden organische mikrobizide Verbindungen wie Chlorhexidin in unterschiedlichen Zusammensetzungen und Werkstoffen eingesetzt, aber es gibt bislang keine Zusammensetzungen oder Werkstoffe, die als antimikrobielle Zusammensetzung oder Lack auf Kunststoff oder Metalloberflächen aufgetragen werden können und dort über längere Zeit ihre antimikrobielle Wirkung zeigen. Langzeitwirkung wird zwar für Chlorhexidin-haltige Zusammensetzungen, die als Beimischung zu Dentalwerkstoffen verwendet werden, beschrieben, dies wird allerdings erst mit Clorhexidinkonzentrationen von mehr als 20 Gew-% erreicht.

Im Stand der Technik sind auch keine Chlorhexidin-haltigen Zusammensetzungen oder Werkstoffe bekannt, die nicht nur für Dentalmaterialien, sondern auch für andere Werkstoffe wie Metalle, Kunststoffe oder Gläser geeignet sind und mikrobizide Aktivität auch unter thermozyklischer Belastung für längere Zeiträume in Kombination mit antiadhäsiven Eigenschaften gewährleisten. Dies bedeutet, dass die antimikrobielle Langzeitwirkung in generell verwendbaren Beschichtungswerkstoffen noch ein ungelöstes Problem darstellt. Die im Stand der Technik beschriebenen lackartigen Trägersysteme sind für Chlorhexidin außerhalb des Dentalbereichs kaum anwendbar.

DE 19935230 A1 betrifft ein biofilmhemmendes Mittel aus einem Metalloxid-Xerogel, das in homogener Verteilung Edelmetallverbindungen und eine oder mehrere Verbindungen mit einem quarternären Stickstoff-, Phosphor- oder Schwefelatom oder einem phenolischen Rest in immobilisierter Form enthält.

US 4563351 A betrifft eine selbstgelierende wässrige therapeutische Gelzusammensetzung für die verzögerte Freisetzung eine therapeutischen Mittels aus der Gelzusammensetzung. DE 102005000905 A1 beschreibt eine antibakterielle Beschichtung aus Maleinsäure-funktionalisierten Silica-Nanopartikeln und einem Wirkstoff auf Basis von Chlorbisphenol oder Octenidin. US 2003/044451 A1 beschreibt eine flexible Beschichtung umfassend ein bei Raumtemperatur vulkanisierendes Silicon und Urethan.

Die erfindungsgemäße Aufgabenstellung bestand daher darin, silberfreie oder stark silberreduzierte mikrobizide Systeme mit einer hohen mikrobiziden Aktivität und weitgehender Vermeidung von Biofilmbildung und einem einstellbaren Zeitverhalten zu finden, wobei eine Resistenz gegen Auslaugbelastung gewährleistet sein sollte und die Beschichtungssysteme für den täglichen Gebrauch auch außerhalb des oralen zahntechnischen Bereiches über einen längeren Zeitraum verwendbar sein sollten. Dies konnte dadurch gelöst werden, dass ein organisch-anorganischer Hybrid- oder Nanokomposit-Beschichtungswerkstoff verwendet wird, in den als organische mikrobizide Verbindung Chlorhexidin, beispielsweise in Konzentrationen von 2, 5 oder 10 Gew.-% eingebracht wird.

Demgemäß betrifft die Erfindung ein Substrat mit einer mikrobiziden Beschichtung aus einer gehärteten mikrobiziden Beschichtungszusammensetzung, die wie in Anspruch 1 definiert ist.

Nach Applikation und Aushärtung auf Substraten, wie z.B. Kunststoffen oder Metallen, zeigt dieser Beschichtungswerkstoff hervorragende antimikrobielle Eigenschaften. Dies wurde sowohl für Escherichia coli als auch für Staphyllococus aureus nachgewiesen. Überraschenderweise zeigt er auch nach 2500 Thermozyklen (Temperaturwechsel 5°C - 55°C, jeweils 60 s) im Wasserbad praktisch keine Verschlechterung der mikrobiziden Eigenschaften. Durch die Modifizierung der Beschichtungszusammensetzung mit einer fluorhaltigen Komponente, wie z.B. Fluorsilanen, konnten auch antiadhäsive Eigenschaften erhalten werden. Im folgenden wird die Erfindung im einzelnen beschrieben.

Die mikrobizide Beschichtungszusammensetzung basiert auf organisch-anorganischen Hybrid- oder Nanokomposit-Materialien, die aus hydrolysierbaren Silanen hergestellt werden können, bevorzugt mithilfe des Sol-Gel-Verfahrens. Dabei werden organisch funktionalisierte hydrolysierbare Siliciumverbindungen in Kombination mit hydrolysierbaren Siliciumverbindungen ohne nicht hydrolysierbare Gruppen, wie Alkoxysilanen, unter Zusatz von Metall- oder Borverbindungen, wie z. B. Alkoxiden der Elemente Al, Zr oder Ti, über Hydrolyse und Kondensationsreaktionen unter Bildung von Kondensaten vernetzt, so dass Zusammensetzungen erhalten werden, die sich für Beschichtungszwecke eignen.

Insbesondere umfasst die mikrobizide Beschichtungszusammensetzung ein Kondensat von mindestens einer hydrolysierbaren Siliciumverbindung mit mindestens einer nicht hydrolysierbaren organischen Gruppe, wobei es sich bevorzugt um ein nachstehend beschriebenes Organosilan der Formel (I) handelt. Neben der mindestens einen hydrolysierbaren Siliciumverbindung mit mindestens einer nicht hydrolysierbaren organischen Gruppe werden zur Herstellung des Kondensats zusätzlich mindestens eine hydrolysierbare Siliciumverbindung ohne nicht hydrolysierbare Gruppen, wobei es sich bevorzugt um eine nachstehend beschriebene hydrolysierbare Siliciumverbindung der Formel (II) handelt, und mindestens eine hydrolysierbare Metall- oder Borverbindung, wobei es sich bevorzugt um eine nachstehend beschriebenes Verbindung der Formel (III) handelt, verwendet.

Die Beschichtungszusammensetzung umfasst ein Kondensat von mindestens einer hydrolysierbaren Siliciumverbindung mit mindestens einer nicht hydrolysierbaren organischen Gruppe und mindestens einer hydrolysierbaren Siliciumverbindung ohne nicht hydrolysierbare Gruppen und mindestens einer hydrolysierbaren Metall- oder Borverbindung. Dementsprechend umfasst die mikrobizide Beschichtungszusammensetzung bevorzugt ein Kondensat von
(a) mindestens einem Organosilan der allgemeinen Formel (I)

   RₙSiX₄₋ₙ (I)

   worin die Reste R gleich oder verschieden sind und hydrolytisch nicht abspaltbare Gruppen darstellen, die Reste X gleich oder verschieden sind und hydrolytisch abspaltbare Gruppen oder Hydroxygruppen darstellen und n den Wert 1, 2 oder 3, bevorzugt 1 oder 2 und besonders bevorzugt 1 hat,
(b) mindestens einem hydrolysierbaren Silan der allgemeinen Formel (II)

   SiX₄ (II)

   worin die Reste X die Bedeutung wie in der Formel (I) haben, und
(c) mindestens einer Metall- oder Borverbindung der allgemeinen Formel (III)

   MXₐ (III)

   worin M ein Metall oder Bor ist, X wie in Formel (I) definiert ist, wobei zwei Gruppen X durch eine Oxogruppe ersetzt sein können, und a der Wertigkeit des Elements entspricht.

Geeignete Beispiele für hydrolytisch abspaltbare Gruppen X der obigen Formeln (I), (II) und (III) sind Wasserstoff, Halogen (F, Cl, Br oder I, insbesondere Cl oder Br), Alkoxy (z.B. C₁₋₆-Alkoxy, wie z.B. Methoxy, Ethoxy, n-Propoxy, i-Propoxy und n-, i-, sek.- oder tert.-Butoxy), Aryloxy (vorzugsweise C₆₋₁₀-Aryloxy, wie z.B. Phenoxy), Alkaryloxy, z.B. Benzoyloxy, Acyloxy (z.B. C₁₋₆-Acyloxy, vorzugsweise C₁₋₄-Acyloxy, wie z.B. Acetoxy oder Propionyloxy) und Alkylcarbonyl (z.B. C₂₋₇-Alkylcarbonyl wie Acetyl). Ebenfalls geeignet sind NH₂, mit Alkyl, Aryl und/oder Aralkyl mono- oder disubstituiertes Amino, wobei Beispiele für die Alkyl-, Aryl und/oder Aralkylreste die nachstehend für R angegebenen sind, Amido wie Benzamido oder Aldoxim- oder Ketoximgruppen. Zwei oder drei Gruppen X können auch miteinander verbunden sein, z.B. bei Si-Polyolkomplexen mit Glycol, Glycerin oder Brenzcatechin.

Die bevorzugten hydrolytisch abspaltbaren Reste X sind Alkoxygruppen und Acyloxygruppen. Besonders bevorzugte hydrolytisch abspaltbare Reste sind C₂₋₄-Alkoxygruppen, insbesondere Methoxy und Ethoxy.

Beispiele für hydrolytisch nicht abspaltbare Reste R der Formel (I) sind Alkyl (z.B. C₁₋₂₀-Alkyl, insbesondere C₁₋₄-Alkyl, wie Methyl, Ethyl, n-Propyl, i-Propyl, n-Butyl, i-Butyl, sek.-Butyl und tert.-Butyl), Alkenyl (z.B. C₂₋₂₀-Alkenyl, insbesondere C₂₋₄-Alkenyl, wie Vinyl, 1-Propenyl, 2-Propenyl und Butenyl), Alkinyl (z.B. C₂₋₂₀-Alkinyl, insbesondere C₂₋₄-Alkinyl, wie Ethinyl oder Propargyl), Aryl (insbesondere C₆₋₁₀-Aryl, wie Phenyl und Naphthyl) und entsprechende Aralkyl- und Alkarylgruppen, wie Tolyl und Benzyl, und cyclische C₃-C₁₂-Alkyl- und -Alkenylgruppen, wie Cyclopropyl, Cyclopentyl und Cyclohexyl.

Die nicht hydrolysierbare organische Gruppe der mindestens einen hydrolysierbaren Siliciumverbindung umfasst eine polymerisierbare Gruppe, die eine Epoxygruppe umfasst. Über die polymerisierbare Gruppe des Restes R ist nach Bedarf auch eine Vernetzung des Kondensats über organische Gruppen möglich ist. Geeignete polymerisierbare Gruppen sind dem Fachmann bekannt.

Beispiele für die polymerisierbare Gruppe sind z.B. Glycidyl oder Glycidyloxy. Diese Substituenten sind über zweiwertige Brückengruppen, insbesondere Alkylen-, Alkenylen- oder Arylen-Brückengruppen, die durch Sauerstoff- oder -NH-Gruppen unterbrochen sein können, an das Siliciumatom gebunden. Die Brückengruppen enthalten z. B. 1 bis 18, vorzugsweise 1 bis 8 und insbesondere 1 bis 6 Kohlenstoffatome. Die genannten zweiwertigen Brücken-gruppen leiten sich z.B. von den oben genannten einwertigen Alkyl-, Alkenyl- oder Arylresten ab.

Bevorzugte Beispiele für hydrolytisch nicht abspaltbare Reste R mit polymerisierbarer Gruppe, über die eine Vernetzung möglich ist, sind ein Glycidyl- oder ein Glycidyloxy-(C₁₋₂₀)-alkylen-Rest, wie β-Glycidyloxyethyl, γ-Glycidyloxypropyl, δ-Glycidyloxybutyl, ε-Glycidyloxypentyl, ω-Glycidyloxyhexyl, und 2-(3,4-Epoxycyclohexyl)ethyl. Ein besonders bevorzugter Rest ist γ-Glycidyloxypropyl.

Konkrete Beispiele für Organosilane der Formel (I) mit polymerisierbarer Gruppe sind Glycidyloxypropyltrimethoxysilan (GPTS) und γ-Glycidyloxypropyltriethoxyslian (GPTES).

Bevorzugte Reste R der Formel (I) ohne polymerisierbare Gruppe sind Alkylgruppen, vorzugsweise mit 1 bis 4 Kohlenstoffatomen, insbesondere Methyl und Ethyl, sowie Arylreste wie Phenyl, z.B. Ethyltriethoxysilan, Methyltriethoxysilan oder Phenyltriethoxysilan. Wie gesagt ist aber der Einsatz von mindestens eine hydrolysierbaren Silan mit mindestens einer nicht hydrolysierbaren Gruppe, die eine polymerisierbare Gruppe umfasst, zwingend, es können aber gegebenenfalls zusätzlich vorstehend erläuterte Organosilane der Formel (I) ohne polymerisierbare Gruppe für die Herstellung des Kondensats verwendet werden.

Beispiele für die eingesetzten hydrolysierbaren Silane der allgemeinen Formel (II) sind Si(OCH₃)₄, Si(OC₂H₅)₄, Si(O-n- oder i-C₃H₇)₄, Si(OC₄H₉)₄, SiCl₄, HSiCl₃, Si(OOCCH₃)₄. Von diesen hydrolysierbaren Silanen ist Tetraethoxysilan (TEOS) besonders bevorzugt.

Die Silane lassen sich nach bekannten Methoden herstellen; vgl. W. Noll, "Chemie und Technologie der Silicone", Verlag Chemie GmbH, Weinheim/Bergstraße (1968).

Bei der hydrolysierbaren Metall- oder Borverbindung der Formel (III)

MXₐ (III)

ist M ein Metall oder Bor, X wie in Formel (I) definiert, wobei zwei Gruppen X durch eine Oxogruppe ersetzt sein können, und entspricht a der Wertigkeit des Elements.

M ist bevorzugt ein Metall der Hauptgruppen I bis V oder der Nebengruppen II bis VIII des Periodensystems der Elemente oder Bor, bevorzugter ein Metall der Hauptgruppen III bis V und/oder der Nebengruppen II bis IV des Periodensystems der Elemente. Beispiele sind Mg, B, Al, Ga, In, Ge, Sn, Pb, Y, Ti, Zr, V, Nb, Ta, Mo, W, Fe, Cu, Ag, Zn, Cd, Ce und La, vorzugsweise ist M Al, B, Sn, Ti, Zr, V oder Zn, insbesondere Al, Ti oder Zr, wobei Al besonders bevorzugt ist. Ebenfalls einsetzbar sind z.B. hydrolysierbare Verbindungen von Metallen der Hauptgruppen I und II des Periodensystems (z.B. Na, K, Ca und Mg) und der Nebengruppen V bis VIII des Periodensystems (z.B. Mn, Cr, Fe und Ni). Auch hydrolysierbare Verbindungen der Lanthanoiden wie Ce können verwendet werden.

Beispiele für die Gruppe X der hydrolysierbaren Metall- oder Borverbindung wurden bereits oben angegeben. Es kann sich bei der hydrolysierbaren Metall- oder Borverbindung um ein Salz handeln, wobei die Gruppe X dann z.B. ein Halogenid, Acetat, Sulfat usw. sein kann. Bei der hydrolysierbaren Metall- oder Borverbindung handelt es sich bevorzugt um ein Alkoxid, Oxid, Hydroxid oder Oxidhydroxid. Es können auch mehr als eine hydrolysierbare Metall- oder Borverbindung eingesetzt werden.

Geeignete hydrolysierbare Metallverbindungen sind z. B. Al(OCH₃)₃, Al(OC₂H₅)₃, Al(O-n-C₃H₇)₃, Al(O-i-C₃H₇)₃, Al(O-n-C₄H₉)₃, Al(O-sek.-C₄H₉)₃, AlCl₃, AlCl(OH)₂, Al(OC₂H₄OC₄H₉)₃, TiCl₄, Ti(OC2H5)4, Ti(O-n-C₃H₇)₄, Ti(O-i-C₃H₇)₄, Ti(OC4H9)4, Ti(2-ethylhexoxy)₄, ZrCl₄, Zr(OC₂H₅)₄, Zr(O-n-C₃H₇)₄, Zr(O-i-C₃H₇)₄, Zr(OC4H9)4, ZrOCl₂, Zr(2-ethylhexoxy)₄, sowie Zr-Verbindungen, die komplexierende Reste aufweisen, wie z.B. β-Diketon- und (Meth)acrylreste, Borsäure, BCl₃, B(OCH₃)₃, B(OC₂H₅)₃, SnCl₄, Sn(OCH₃)₄, Sn(OC₂H₅)₄, VOCl₃ und VO(OCH₃)₃. Bevorzugte Beispiele für die Metall- oder Borverbindung sind Alkoxidverbindungen, Oxide, Hydroxide oder Oxidhydroxide von Ti, Al und Zr, wobei solche von Al bevorzugt sind.

In einer besonders bevorzugten Ausführungsform wird das Kondensat für die mikrobizide Beschichtungszusammensetzung unter Verwendung eines Organosilans der Formel (I) mit polymerisierbarer Gruppe, wie Glycidyloxypropyltriethoxysilan (GPTS), eines Orthokieselsäureesters, wie Tetraethoxysilan (TEOS), und einer Metallverbindung, wie Al-tri-sek.-butylat, hergestellt.

Zur Herstellung des Kondensats der Beschichtungszusammensetzung werden bevorzugt etwa 20 bis 70 Mol-%, bevorzugter etwa 30 bis 60 Mol-%, der hydrolysierbaren Siliciumverbindung mit mindestens einer nicht hydrolysierbaren organischen Gruppe, wobei der Einsatz von etwa 50 Mol-% und insbesondere etwa 40 Mol-% Organosilane besonders bevorzugt ist, und bevorzugt etwa 20 bis 70 Mol-%, bevorzugter etwa 25 bis 60 Mol-%, der hydrolysierbaren Siliciumverbindung ohne nicht hydrolysierbare Gruppen, wobei der Einsatz von etwa 40 Mol-% besonders bevorzugt ist, verwendet, wobei der Rest durch die hydrolysierbare Metall- oder Borverbindung gebildet wird.

Das molare Verhältnis von eingesetzten Siliciumverbindungen zu eingesetzten Metall- oder Borverbindungen kann in breiten Bereichen variieren, es liegt aber bevorzugt im Bereich von etwa 10.000:1 bis 10:1.

Das Kondensat wird durch Hydrolyse und Kondensation der hydrolysierbaren Ausgangsverbindungen erhalten, insbesondere nach dem Sol-Gel-Verfahren. Beim Sol-Gel-Verfahren werden die hydrolysierbaren Verbindungen mit Wasser, gewöhnlich in Gegenwart von sauren oder basischen Katalysatoren hydrolysiert und zumindest teilweise kondensiert. Vorzugsweise erfolgt die Hydrolyse und Kondensation in Gegenwart saurer Kondensationskatalysatoren (z.B. Salzsäure, Phosphorsäure oder Ameisensäure) bei einem pH-Wert von vorzugsweise 1 bis 3. Das sich bildende Sol kann durch geeignete Parameter, z.B. Kondensationsgrad, Lösungsmittel oder pH-Wert, auf die für die Beschichtungszusammensetzung gewünschte Viskosität eingestellt werden.

Weitere Einzelheiten des Sol-Gel-Verfahrens sind z.B. bei C.J. Brinker, G.W. Scherer: "Sol-Gel Science - The Physics and Chemistry of Sol-Gel-Processing", Academic Press, Boston, San Diego, New York, Sydney (1990) beschrieben.

Für die Hydrolyse und Kondensation können stöchiometrische Wassermengen, aber auch geringere oder größere Mengen verwendet werden. Die zur Hydrolyse und Kondensation der hydrolysierbaren Verbindungen eingesetzte Wassermenge beträgt vorzugsweise 0,1 bis 0,9, und besonders bevorzugt 0,25 bis 0,75 Mol Wasser pro Mol der vorhandenen hydrolysierbaren Gruppen. Besonders gute Ergebnisse werden mit weniger als 0,7 Mol Wasser, insbesondere 0,65 bis 0,75 Mol Wasser, pro Mol der vorhandenen hydrolysierbaren Gruppen erzielt.

Ferner umfasst die Beschichtungszusammensetzung eine organische mikrobizide Verbindung umfassend Chlorhexidin. Sie kann als Feststoff oder als Lösung eingesetzt werden. Die eingesetzte Menge der organischen mikrobiziden Verbindung in der Beschichtungszusammensetzung kann in breiten Bereichen variieren, liegt aber bevorzugt im Bereich von etwa 15 bis 0,1 Gew.-% und besonders bevorzugt von etwa 10 bis 1 Gew.-%, bezogen auf den gesamten Feststoffgehalt der Beschichtungszusammensetzung.

Bei der eingesetzten mikrobiziden Verbindung, die auch als Mikrobizide bezeichnet werden, handelt es sich um eine organische mikrobizide Verbindung. Mikrobizide Verbindungen werden in der Technik in großem Umfang z.B. als Desinfektionsmittel oder für den Materialschutz eingesetzt und sind dem Fachmann bekannt. Weitere Erläuterungen finden sich z.B. in Ullmanns Encyclopädie der technischen Chemie, 4. Auflage, unter den Überschriften Desinfektionsmittel, Bd. 10, S. 41-58, und Materialschutz, Bd. 16, S. 499-502.

Als organische mikrobizide Verbindung wird Chlorhexidin eingesetzt, da festgestellt wurde, dass damit die beste mikrobizide Wirkung erzielt werden konnte.

Zur optimalen Einstellung des Abgabeverhaltens (Abgabeverhalten 0. Ordnung) an mikrobizider Komponente kann diese auch in nanopartikulärer Form zugegeben werden. Die Nanopartikel können dazu durch inverse Mikroemulsionstechnik oder durch Mahlprozesse hergestellt werden. Bei Verwendung von Mahlverfahren zur Herstellung der Partikel kann es ausreichend sein, diese bis in den sub-µm Bereich zu zermahlen.

Um eine antiadhäsive Wirkung der Beschichtung zu erzielen, kann es zweckmäßig sein, dass die Beschichtungszusammensetzung eine fluorhaltige Komponente umfasst. Die Fluorkomponente kann z.B. in einer Menge im Bereich von etwa 20 bis 0,1 Gew.-%, bevorzugt 4 bis 0,5 Gew.-%, bezogen auf den gesamten Feststoffgehalt der Beschichtungszusammensetzung, zugegeben werden.

Als fluorhaltige Komponente wird bevorzugt ein Fluorsilan verwendet. Beispiele für ein solches Fluorsilan sind Silane der Formel (IV)

Rf(R)_{b}SiX_{(3-b)} (IV)

worin X und R wie in Formel (I) definiert sind, Rf eine nicht-hydrolysierbare Gruppe ist, die 1 bis 30 Fluoratome an aliphatische Kohlenstoffatome gebunden aufweist, und b 0, 1 oder 2 ist.

In Formel (IV) ist Rf vorzugsweise eine fluorierte Alkylgruppe, z.B. mit 3 bis 20 C-Atomen und Beispiele sind CF₃CH₂CH₂, C₂F₅CH₂CH₂, n-C₆F₁₃CH₂CH₂, i-C₃F₇OCH₂CH₂CH₂, n-C₈F₁₇CH₂CH₂ und n-C₁₀F₂₁-CH₂CH₂. Ein bevorzugtes Beispiel für Rf ist 1 H,1 H,2H,2H-Perfluoroctyl. Konkrete Beispiele sind CF₃CH₂CH₂SiCl₂(CH₃), CF₃CH₂CH₂SiCl(CH₃)₂, CF₃CH₂CH₂Si(CH₃)(OCH₃)₂, C₂F₅-CH₂CH₂-SiZ₃, n-C₆F₁₃-CH₂CH₂SiZ₃, n-C₈F₁₇-CH₂CH₂-SiZ₃, n-C₁₀F₂₁-CH₂CH₂-SiZ₃, worin Z = OCH₃, OC₂H₅ oder Cl; i-C₃F₇O-CH₂CH₂CH₂-SiCl₂(CH₃), n-C₆F₁₃-CH₂CH₂-Si(OCH₂CH₃)₂, n-C₆F₁₃-CH₂CH₂SiZ₃, n-C₈F₁₇-CH₂CH₂-SiZ₃, n-C₁₀F₂₁-CH₂CH₂-SiZ₃, worin Z = OCH₃, OC₂H₅ oder Cl; i-C₃F₇O-CH₂CH₂CH₂-SiCl₂(CH₃), n-C₆F₁₃-CH₂CH₂-Si(OCH₂CH₃)₂, n-C₃F₁₃-CH₂CH₂-SiCl₂(CH₃) und n-C₆F₁₃-CH₂CH₂-SiCl(CH₃)₂, wobei z.B. 1H,1H,2H,2H-Perfluoroctyltriethoxysilan (FTS) gut geeignet ist

Das Beschichtungsmaterial kann herkömmliche Additive enthalten, insbesondere Lösungsmittel wie Alkohole wie Methanol, Ethanol, 1-Propanol, Isopropanol und 1-Butanol oder Gemische derselben. Andere mögliche Lösungsmittel sind z.B. Wasser, Ketone, Ether, Amide, wie Dimethylformamid, Tetrahydrofuran, Dioxan, Sulfoxide, Sulfone oder Butylglycol Hochsiedende Lösungsmittel sind z.B. Polyether wie Triethylenglycol und Diethylenglycoldiethylether. Es können auch Mischungen verschiedener Lösungsmittel verwendet werden.

Beispiele für weitere Additive, die gegebenenfalls der Beschichtungszusammensetzung zugesetzt werden können, sind weitere kondensierbare oder polymerisierbare Komponenten, wie organische Monomere oder Oligomere bzw. Polymere, mit oder ohne mögliche Anbindung an das anorganische Netzwerk. Eine Anbindung an das anorganische Netzwerk kann z.B. dadurch erreicht werden, dass die kondensierbare oder polymerisierbare Komponenten polymerisierbare Gruppen aufweisen, die mit den polymerisierbaren Gruppen der Organosilane der Formel (I) unter Vernetzung reagieren können.

Solche organischen Monomere, Oligomere oder Polymere sind als Bindemittelkomponente dem Fachmann bestens vertraut und er kann sie ohne weiteres in geeigneter Weise je nach Bedarf auswählen. Beispiele sind Diethylenglycoldimethacrylat (DEGMA), Triethylenglycoldimethacrylat (TEGDMA), Bisphenol A-glycidylmethacrylat (BisGMA), Bisphenol A-diacrylat, Acrylsäurebutylester (AB), Diurethandimethacrylat, Urethandimethacrylat (UDMA), Styrol, Styrolderivate, Vinylpyridin, Vinylbenzolsulfonsäure, Laromer®-Acrylate der BASF, Ebecryl®, Pentaerythrittriacrylat (PETIA), Hexandioldiacrylat, Trimethylolpropantriacrylat, Trimethylolpropantrimethacrylat, Neopentylglycoldimethacrylat, Neopentylglycoldiacrylat, Epoxyacrylatharze, oligomere Methacrylate, wie LR 8862, LR 8907 von BASF, oder oligomere Urethanacrylate, wie UA 19T von BASF, sowie Oligomere oder Polymere der genannten Monomere.

Ein weiteres Additiv, das gegebenenfalls der Beschichtungszusammensetzung zugesetzt werden kann, sind Nanopartikel, d.h. nanoskalige Teilchen. Dabei handelt es sich bevorzugt um anorganische nanoskalige Teilchen, vorzugsweise aus einem Metall- oder Halbmetalloxid Unter nanoskaligen Teilchen werden vorzugsweise Teilchen mit einem mittleren Teilchendurchmesser von nicht mehr als 1.000 nm, bevorzugter nicht mehr als 100 nm und insbesondere nicht mehr als 50 nm verstanden. Der mittlere Teilchendurchmesser bezieht sich auf das Volumenmittel (d₅₀), wobei ein UPA (Ultrafine Particle Analyzer, Leeds Northrup (laseroptisch, dynamische Laserlichtstreuung)) zur Messung verwendet werden kann.

Bevorzugt handelt es sich um Nanopartikel aus Metall- oder Halbmetallverbindungen, insbesondere Metall- oder Halbmetallchalkogeniden Hierfür können alle Metalle oder Halbmetalle eingesetzt werden. Bevorzugte Metalle oder Halbmetalle für die Metall- oder Halbmetallverbindungen sind z.B Mg, B, Al, Si, Ge, Sn, Ti, Zr, V, Nb, Ta, Fe, Zn und Ce. Es kann eine Art von Nanopartikel oder eine Mischung von Nanopartikeln eingesetzt werden.. Die Teilchen können auf verschiedene Weise hergestellt werden, z.B durch Flammpyrolyse, Plasmaverfahren, Kolloidtechniken, Sol-Gel-Prozesse, kontrollierte Keim- und Wachstumsprozesse, MOCVD-Verfahren und Emulsionsverfahren. Diese Verfahren sind in der Literatur ausführlich beschrieben

Beispiele sind (gegebenenfalls hydratisierte) Oxide wie ZnO, SiO₂, GeO₂, TiO₂, ZrO₂, CeO₂, SnO₂, Al₂O₃ (insbesondere Böhmit, AlO(OH), auch als Aluminiumhydroxid), Fe₂O₃, Fe₃O₄, Ta₂O₅, Nb₂O₅, WO₃; Phosphate, Silicate, Zirconate, Aluminate, Stannate von Metallen oder Halbmetallen, und entsprechende Mischoxide, Spinelle, Ferrite oder Mischoxide mit Perowskitstruktur wie BaTiO₃.

In der Beschichtungszusammensetzung können weitere Additive enthalten sein, wie z. B . Vernetzungsmittel, Füllstoffe, organische und anorganische Farbpigmente, Farbstoffe, UV-Absorber, Gleitmittel, Verlaufmittel, Netzmittel, Härtungsbeschleuniger, Antioxidationsmittel, Haftvermittler und Starter. Der Starter kann zur thermisch oder photochemisch induzierten Vernetzung dienen.

Demgemäß kann die Beschichtungszusammensetzung zur Herstellung einer langzeitstabilen mikrobiziden Beschichtung in einer zweckmäßigen Ausführungsform folgende Komponente, einschließlich optionaler Komponenten umfassen:
(a) ein Kondensat aus mindestens einem Organosilan, wie z. B. GPTS, mindestens einem hydrolysierbaren Silan, wie TEOS, und mindestens einer hydrolysierbaren Metallverbindung, wie z. B. Aluminiumtri-sek.-butylat
(b) als organische mikrobizide Komponente Chlorhexidin, wobei der Gehalt an dieser Komponente bezogen auf den Gesamtfeststoffgehalt bevorzugt im Bereich von 15 und 0,5 Gew% liegt,
(c) gegebenenfalls eine fluorhaltige Komponente, wie 1H,1H,2H,2H-Perfluoroctyl-triethoxysilan, die gegebenenfalls in das Kondensat eingebaut wird, wobei der Gehalt der fluorhaltigen Komponente bezogen auf den Gesamtfeststoffgehalt bevorzugt im Bereich von 4 bis 0,5 Gew.-% liegt,
(d) gegebenenfalls Lösungsmittel,
(e) gegebenenfalls Nanopartikel und
(f) gegebenenfalls weitere Additive, wie kondensierbare oder polymerisierbare Komponenten, wie organische Monomere oder Oligomere, mit oder ohne Anbindung an das anorganische Netzwerk.

Bei der Beschichtungszusammensetzung kann es sich um eine Lösung, ein Sol oder eine Emulsion handeln. Das erhaltene Kondensat kann auch als anorganischorganisches Hybrid- oder Nanokompositmaterial bezeichnet werden.

Die Beschichtungszusammensetzung wird zur Herstellung einer langzeitstabilen, mikrobiziden und die Biofilmbildung verhindernden Beschichtung auf ein Substrat aufgetragen und gehärtet. Als Substrate kommen alle möglichen Materialien in Betracht. Das Substrat kann vorbehandelt sein, z.B. durch Reinigung oder Aufbringung eines Primers. Die Erfindung eignet sich insbesondere für Substrate aus Metall, Kunststoff, Glas, Keramik, Leder oder Kunstleder. Das Substrat kann die Oberfläche oder den Teil einer Oberfläche eines Gegenstandes bilden.

Die Beschichtungszusammensetzung kann auf jede übliche Weise auf das Substrat aufgetragen werden Hierbei können insbesondere alle gängigen nasschemischen Beschichtungsverfahren eingesetzt werden Beispiele sind Schleuderbeschichten, Rakeln, Sprühen, Spritzen, Schleudern, Gießen, Rollen, Streichen, Flutbeschichten, Foliengießen, Messergießen, Slotcoating, Meniskus-Coating, Curtain-Coating, Walzenauftrag oder übliche Druckverfahren, wie Siebdruck oder Flexoprint

Die Menge der aufgetragenen Beschichtungszusammensetzung wird so gewählt, dass die gewünschte Schichtdicke erzielt wird. Beispielsweise wird so gearbeitet, dass Trockenschichtdicken im Bereich von etwa 1 bis 15 µm und bevorzugt etwa 2 bis 5 µm erhalten werden. Nach Aufbringung der Beschichtungszusammensetzung auf die Substrate kann eine Trocknung, z.B. bei Umgebungstemperatur (unter 40°C) erfolgen..

Die Härtung der Beschichtungszusammensetzung erfolgt bevorzugt thermisch oder durch Strahlung und kann z.B. bei Temperaturen über 40°C und unter 300°C, bevorzugt nicht mehr als 200°C und insbesondere nicht mehr als 160°C erfolgen Die Dauer der Aushärtung kann mehrere Stunden, z.B. mehr als 2 h, und mehr betragen. Nach der Härtung wird eine mikrobizide Beschichtung auf dem Substrat erhalten, die eine aus dem gehärteten Kondensat erhaltene anorganisch-organische Kompositmatrix umfasst, in der die organische mikrobizide Verbindung erhalten ist.

Die erfindungsgemäß beschichteten Oberflächen und Materialien eignen sich insbesondere für desinfizierende, konservierende, kosmetische, pharmazeutische oder medizinische Zwecke Oberflächen und Gegenstände aus dem pharmazeutischen bzw medizinischen Bereich oder dem Lebensmittelbereich, bei denen Keimfreiheit erforderlich ist, sind bevorzugte Anwendungsgebiete. Die Erfindung eignet sich insbesondere für Materialien wie Metall, Kunststoffe, Gläser oder auch Keramiken.

Die Zusammensetzungen wurden nach den oben beschriebenen Verfahren auf unterschiedliche Materialien wie z. B. Polycarbonat (PC), Kunstleder oder Edelstahl aufgetragen und zeigten sehr gute Haftung im Gitterschnitt/ Tapetest und gute Abriebfestigkeiten.

Die Zusammensetzungen zeigen starke biozide Wirkung auch über längere Zeiträume, besonders in Verbindung mit flüssigen Medien. Dies konnte sowohl für Escherichia coli als auch für Staphylococus aureus nachgewiesen werden. Dazu wurden die antibakteriellen Aktivitäten der Beschichtungen im Agar Diffusion Test untersucht. Dabei zeigten die Beschichtungen bereits mit 1 Gew.-% Chlorhexidin hervorragende mikrobizide Aktivität.

Die beispielhaft auf PC applizierten Beschichtungen wurden in Langzeittests thermozyklischer Belastung unterzogen wobei 2.500 Thermozyklen (Temperaturwechsel 5°C - 55°C, jeweils 60 s) im Wasserbad gefahren wurden. Dabei wurde fast keine Verschlechterung der mikrobiziden Eigenschaften festgestellt. Dies konnte unter Verwendung der Life-Dead-Methode und Markierung der Bakterien mit einem Fluoreszenzmarker nachgewiesen werden. Durch die Modifizierung der Beschichtungszusammensetzung mit Fluorsilanen konnten auch die gewünschten antiadhäsiven Eigenschaften nachgewiesen werden. Im Unterschied zu unbeschichteten oder Chlorhexidin-freien Oberflächen findet keine Bakterienbesiedlung oder Biofilmbildung statt.

### Beispiele

### A. Herstellung des Beschichtungswerkstoffs

236,34 g GPTS und 182,29 g TEOS wurden vorgelegt und gemischt. Anschließend wurden unter Rühren 64,40 g Böhmitdispersion hinzu gegegeben. Die Dauer der Vorhydrolyse, die bei 20°C ± 2°C durchgeführt wurde, betrug 2 h. Nach Abschluss der Vorhydrolyse wurde das Reaktionsgemisch auf -3°C abgekühlt. Anschließend erfolgte die Zugabe von 180,26 g Aluminiumalkoholat-Lösung unter Rühren. Nach Beendigung der Alkoholatzugabe wurde 2 h bei 0°C gerührt. Zur Nachhydrolse wurden 343,70 g der Böhmitdispersion mithilfe eines Tropftrichters zugegeben (20 ml/min).. Die Zugabe der Dispersion zum Reaktionsgemisch erfolgte unter Rühren bei 0°C ± 1°C Eine Innentemperatur von 5°C wurde nicht überschritten. Nach Zugabe der Böhmitdispersion wurde 15 min bei 0°C ± 1°C gerührt. Nach Entfernung der Kühlung wurde das Sol 30 min auf 20°C erwärmt.

### B. Herstellung mikrobizider Beschichtungszusammensetzungen

### Beschichtungszusammensetzung 1

### (Chlorhexidin 2 Gew.-% bzw. 10 Gew.-%, bezogen auf den Feststoffgehalt)

In einer 200 ml Schottflasche wurden 110,0 g des vorstehend hergestellten Beschichtungswerkstoffs vorgelegt Anschließend wurden unter Rühren 0,66 g (2 Gew.-%) bzw. 3,3 g (10 Gew.-%) Chlorhexidin hinzugegeben. Das Gemisch wurde solange bei Raumtemperatur gerührt, bis sich das Chlorhexidin vollständig aufgelöst hat

### Beschichtungszusammensetzung 2

### (Chlorhexidin 2 Gew.-% bzw 10 Gew.-%, bezogen auf den Feststoffgehalt + FTS, 1 Gew.-%, bezogen auf den Feststoffgehalt)

In einer 200 ml Schottflasche wurden 110,0 g des vorstehend hergestellten Beschichtungswerkstoffs vorgelegt. Anschließend wurden unter Rühren 0,66 g (2 Gew.-%) bzw 3,3 g (10 Gew.-%) Chlorhexidin hinzugegeben Das entsprechende Gemisch wurde solange bei Raumtemperatur gerührt, bis sich das Chlorhexidin vollständig aufgelöst hat Danach wurden 0,4 g FTS hinzugefügt und mindestens 30 min bei Raumtemperatur eingerührt

### Vergleichs-Beschichtungszusammensetzung

### (ohne Chlorhexidin mit FTS, 1 Gew-%, bezogen auf den Feststoffgehalt)

In einer 200 ml Schottflasche wurden 110,0 g des vorstehend hergestellten Beschichtungswerkstoffs vorgelegt Anschließend wurden unter Rühren 0,4 g FTS hinzugefügt und mindestens 30 min bei Raumtemperatur eingerührt.

### C. Auftrag der Beschichtungszusammensetzungen auf PC

### Reinigung der PC-Substrate

Die PC-Substrate wurden mit einem in Isopropanol getränkten Tuch abgewischt Danach wurden die Substrate mit Isopropanol gespült; Spülvorgang von oben nach unten Anschließend wurden die Substrate mit Druckluft abgeblasen.

### Applikation eines Primers

Die Applikation des Primers erfolgte über Dipcoating Das zu beschichtende Substrat wurde in den Primer eingelassen und bleibt für etwa 10 s in der Lösung. Anschließend wird das Substrat mit einer Ziehgeschwindigkeit von 440 mm/min aus der Lösung gezogen. Ablüftzeit nach dem Herausziehen beträgt 5 min. Die Härtung des Primers erfolgte in einem Umluftofen bei 80°C (15 min). Danach erfolgte die Beschichtung mit entsprechendem mikrobizidem System.

### Aufbringung des mikrobiziden Beschichtungssystems

Die Applikation des mikrobiziden Nanokomposit-Beschichtungssystems (Beschichtungszusammensetzung 1, Beschichtungszusammensetzung 2 bzw. Vergleichs-Beschichtungszusammensetzung) erfolgte über Dipcoating. Das zuvor mit Primer versehene Substrat wurde in das Beschichtungssystem eingelassen und blieb für etwa 10 s in der Beschichtungszusammensetzung. Anschließend wurde das Substrat mit einer Ziehgeschwindigkeit von 440 mm/min aus der Lösung gezogen. Die Ablüftzeit nach dem Herausziehen betrug 5 bis 10 min bei Raumtemperatur. Die Härtung der Beschichtungssysteme erfolgte in einem Umluftofen bei 130°C (2 h).

## Patentansprüche

1. Substrat mit einer mikrobiziden Beschichtung aus einer gehärteten Beschichtungszusammensetzung, wobei die Beschichtungszusammensetzung eine silberfreie mikrobizide Beschichtungszusammensetzung ist, die umfasst
a) eine organische mikrobizide Verbindung umfassend Chlorhexidin und
b) ein Kondensat von mindestens einer hydrolysierbaren Siliciumverbindung mit mindestens einer nicht hydrolysierbaren organischen Gruppe, mindestens einer hydrolysierbaren Siliciumverbindung ohne nicht hydrolysierbare Gruppen und mindestens einer hydrolysierbaren Metall- oder Borverbindung, wobei die nicht hydrolysierbare organische Gruppe der mindestens einen hydrolysierbaren Siliciumverbindung eine polymerisierbare Gruppe umfasst, die eine Epoxygruppe umfasst.

2. Substrat nach Anspruch 1, **dadurch gekennzeichnet, dass** die Beschichtungszusammensetzung eine fluorhaltige Komponente umfasst.

3. Substrat nach einem der Ansprüche 1 bis 2, **dadurch gekennzeichnet, dass** die Beschichtungszusammensetzung eine Lösung, eine Emulsion oder ein Sol ist.

4. Substrat nach einem der Ansprüche 1 bis 3, **dadurch gekennzeichnet, dass** die Beschichtungszusammensetzung Nanopartikel umfasst.

5. Verfahren zur Herstellung eines Substrats mit einer mikrobiziden Beschichtung, umfassend das Auftragen eine Beschichtungszusammensetzung auf ein Substrat und das Härten der aufgetragenen Beschichtungszusammensetzung, wobei die Beschichtungszusammensetzung eine silberfreie mikrobizide Beschichtungszusammensetzung ist, die umfasst
a) eine organische mikrobizide Verbindung umfassend Chlorhexidin und
b) ein Kondensat von mindestens einer hydrolysierbaren Siliciumverbindung mit mindestens einer nicht hydrolysierbaren organischen Gruppe, mindestens einer hydrolysierbaren Siliciumverbindung ohne nicht hydrolysierbare Gruppen und mindestens einer hydrolysierbaren Metall- oder Borverbindung, wobei die nicht hydrolysierbare organische Gruppe der mindestens einen hydrolysierbaren Siliciumverbindung eine polymerisierbare Gruppe umfasst, die eine Epoxygruppe umfasst.

6. Verfahren nach Anspruch 5, **dadurch gekennzeichnet, dass** die aufgetragene Beschichtungszusammensetzung thermisch oder durch Strahlung gehärtet wird.

7. Verfahren nach Anspruch 5 oder Anspruch 6, **dadurch gekennzeichnet, dass** die aufgetragene Beschichtungszusammensetzung bei einer Temperatur von weniger als 300°C gehärtet wird.

8. Verwendung eines Substrats mit einer mikrobiziden Beschichtung nach irgendeinem der Ansprüche 1-4 für desinfizierende, konservierende, kosmetische, pharmazeutische oder medizinische Zwecke.

## Claims

1. A substrate having a microbicidal coating of a cured coating composition, wherein the coating composition is a silver-free microbicidal coating composition comprising
a) an organic microbicidal compound comprising chlorhexidine, and
b) a condensate of at least one hydrolysable silicon compound having at least one non-hydrolysable organic group, at least one hydrolysable silicon compound without non-hydrolysable groups and at least one hydrolysable metal or boron compound, wherein the non-hydrolysable organic group of the at least one hydrolysable silicon compound comprises a polymerisable group comprising an epoxy group.

2. The substrate according to claim 1, **characterized in that** the coating composition comprises a fluorine-containing component.

3. The substrate according to one of claims 1 to 2, **characterized in that** the coating composition is a solution, an emulsion or a sol.

4. The substrate according to one of claims 1 to 3, **characterized in that** coating composition comprises nanoparticles.

5. A method for preparing a substrate having a microbicidal coating comprising applying a coating composition to a substrate and curing the applied coating composition, wherein the coating composition is a silver-free microbicidal coating composition comprising
a) an organic microbicidal compound comprising chlorhexidine, and
b) a condensate of at least one hydrolysable silicon compound having at least one non-hydrolysable organic group, at least one hydrolysable silicon compound without non-hydrolysable groups and at least one hydrolysable metal or boron compound, wherein the non-hydrolysable organic group of the at least one hydrolysable silicon compound comprises a polymerisable group comprising an epoxy group.

6. The method according to claim 5, **characterized in that** the applied coating composition is cured thermally or by radiation.

7. The method according to claim 5 or claim 6, **characterized in that** the applied coating composition is cured at a temperature of less than 300 °C.

8. Use of a substrate with a microbicidal coating according to one of claims 1-4 for disinfecting, preserving, cosmetic, pharmaceutical or medical purposes.

## Revendications

1. Substrat doté d'un revêtement microbiocide à partir d'une composition de revêtement durcie, où la composition de revêtement est une composition de revêtement microbiocide dépourvue d'argent, comprenant :
a) un composé microbiocide organique comprenant de la chlorhexidine et
b) un condensat d'au moins un composé de silicium hydrolysable comportant au moins un groupe organique non hydrolysable, d'au moins un composé de silicium hydrolysable sans groupes non hydrolysables et d'au moins un composé de métal ou de bore hydrolysable, où le groupe organique non hydrolysable de l'au moins un composé de silicium hydrolysable comprend un groupe polymérisable, qui comprend un groupe époxy.

2. Substrat selon la revendication 1, **caractérisé en ce que** la composition de revêtement comprend un composant fluoré.

3. Substrat selon l'une des revendications 1 à 2, **caractérisé en ce que** la composition de revêtement est une solution, une émulsion ou un sol.

4. Substrat selon l'une des revendications 1 à 3, **caractérisé en ce que** la composition de revêtement comprend des nanoparticules.

5. Procédé de fabrication d'un substrat doté d'un revêtement microbiocide, comprenant les étapes consistant à appliquer une composition de revêtement sur un substrat et à durcir la composition de revêtement appliquée, la composition de revêtement étant une composition de revêtement microbiocide dépourvue d'argent, comprenant :
a) un composé microbiocide organique comprenant de la chlorhexidine et
b) un condensat d'au moins un composé de silicium hydrolysable comportant au moins un groupe organique non hydrolysable, d'au moins un composé de silicium hydrolysable sans groupes non hydrolysables et d'au moins un composé de métal ou de bore hydrolysable, où le groupe organique non hydrolysable de l'au moins un composé de silicium hydrolysable comprend un groupe polymérisable, qui comprend un groupe époxy.

6. Procédé selon la revendication 5, **caractérisé en ce que** la composition de revêtement appliquée est durcie thermiquement ou par rayonnement.

7. Procédé selon la revendication 5 ou la revendication 6, **caractérisé en ce que** la composition de revêtement appliquée est durcie à une température inférieure à 300°C.

8. Utilisation d'un substrat doté d'un revêtement microbiocide selon l'une quelconque des revendications 1 à 4 à des fins de désinfection, de conservation, cosmétiques, pharmaceutiques ou médicales.
